Europäisches Patentamt

European Patent Office

Office européen des brevets

(11) Publication number: **0 200 988**
A1

(12) **EUROPEAN PATENT APPLICATION**

(21) Application number: **86105542.4**

(22) Date of filing: **22.04.86**

(51) Int. Cl.⁴: **G 21 C 19/26,** B 25 B 9/00

(30) Priority: **06.05.85 US 730879**

(43) Date of publication of application: **12.11.86**
**Bulletin 86/46**

(84) Designated Contracting States: **BE CH DE FR LI SE**

(71) Applicant: **COMBUSTION ENGINEERING, INC.,**
**1000 Prospect Hill Road Box 500, Windsor**
**Connecticut 06095-0500 (US)**

(72) Inventor: **Matteson, Donn Moore, 58 Sharon Drive, South**
**Windsor Connecticut (US)**

(74) Representative: **Mehl, Ernst, Dipl.-Ing.,**
**Postfach 22 01 76, D-8000 München 22 (DE)**

(54) **Rod pulling tool assembly.**

(57) A tubular housing (1) is vertically oriented to bring its lower open end (2) down upon a vertical fuel rod segment (4). The segment entering the housing is surrounded by an elastomer tube (5). A cylindrical rod (9) within the housing is brought against the upper end of the elastomer tube to deform the tube into contact with the side of the rod segment. Thus locked to the housing, the segment can be lifted for discharge in a predetermined area. If the elastomer tube returns to its original shape when the cylindrical rod is removed, the rod segment will be released an a suitable container.

EP 0 200 988 A1

## ROD PULLING TOOL ASSEMBLY

### TECHNICAL FIELD

The present invention relates to tools with which to service and repair nuclear reactor vessel components. More particularly, the invention relates to a tool which removes broken fuel rods from nuclear reactor fuel assemblies.

### BACKGROUND ART

A genre of tools has been and is being developed for nuclear reactor systems. The fuel rods which generate the heat for liquids passed through the reactor vessel break from various causes. Segments of broken fuel rods must be removed so they may be replaced, using other tools for the replacement. There is sufficient access to parts of broken fuel rods, which space is available to insert a tool down into the fuel assembly to reach the segments of broken fuel rods. The required removal tool must have the configuration or organization of its parts to efficiently receive the upper end of the fuel rod segment and exert a lateral force on the segment which enables it to be pulled from its position and removed from the fuel assembly.

### DISCLOSURE OF THE INVENTION

The present invention contemplates an elongated tubular housing open at one end. The housing is arranged vertically to lower its open end toward a broken fuel rod. a length of the broken rod is received into the interior of the housing and within an elastomer body mounted in the housing. A cylindrical push rod is mounted within the housing and arranged to lower onto the upper end of the elastomer body in order to deform the elastomer to grip the broken fuel rod and thereby connect the fuel rod to the housing. The

C-842060

housing and fuel rod are then withdrawn from the fuel assembly.

The invention further contemplates a removal rod coaxial within the housing and adapted to be moved downward against the end of the broken fuel rod to eject the rod from the housing.

The invention further contemplates that the open end of the housing is defined by a cap having a truncated cone flaring outwardly from the housing and ending in an aperture through which the fuel rod is guided into the housing.

Other objects, advantages and features of this invention will become apparent to one skilled in the art upon consideration of the written specification, appended claims, and attached drawings.

BRIEF DESIGNATION OF THE DRAWINGS

Fig. 1 is a sectioned elevation of a removal tool assembly embodying the present invention;

Fig. 2 is a sectioned elevation of the Fig. 1 structure with a fuel rod captured within the assembly for removal; and

Fig. 3 is a sectioned elevation of the assembly of Fig. 1 as it is actuated to positively eject the broken fuel rod from the tool assembly.

BEST MODE FOR CARRYING OUT THE INVENTION

All three figures disclose the operation of the tool assembly as it receives a broken fuel rod, deforms the elastomer body to grip the side of the fuel rod, and operation of the removal rod as it forces the fuel rod from the grip of the elastomer body. This arrangement of the figures enables the use of the same numbers for the same structures as they appear in each figure.

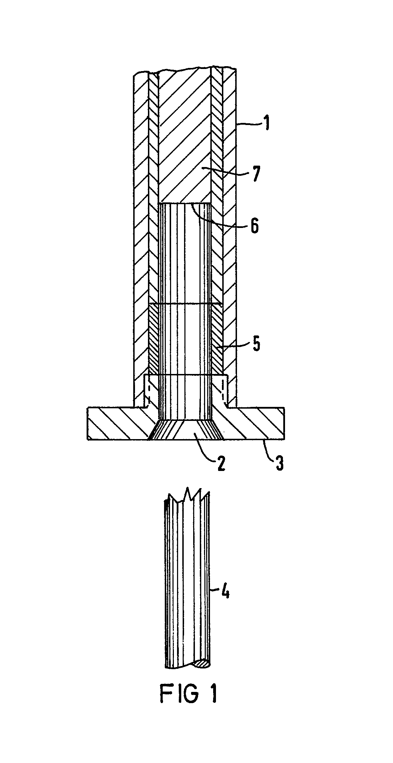

Fig. 1 discloses a generally cylindrical housing 1 open at its lower end through an aperture 2 in an end cap 3. The housing has been lowered to receive the upper end of a broken fuel rod 4. The upper end of fuel rod 4 extends up into housing 1 through an elastomer body 5 and into contact with end 6 of a solid removal rod 7. When sufficiently

C-842060

0200988

deformed, body 5 will engage the side of fuel rod 4 and grip the rod enough to attach the rod to the housing.

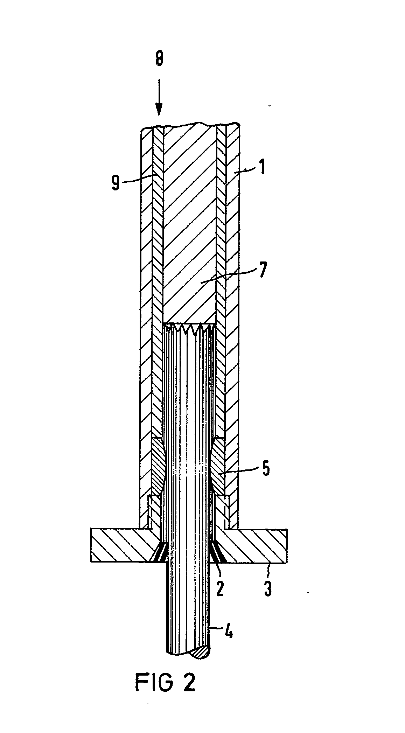

Fig. 2 discloses the deformation of elastomer body 5 which is brought about by a motive means (not shown) energized to cause linear motion of a cylindrical push rod 9 toward end cap 3, thereby compressing elastomer body 5 therebetween and causing the elastomer body to grip the fuel rod. Although not shown, the tool assembly is raised, removing the fuel rod from the fuel assembly grid cage. After placing the fuel rod in a suitable container, the motive means is operated in the reverse direction, thereby relaxing the elastomer body to its original shape and allowing the fuel rod to be released into the suitable container.

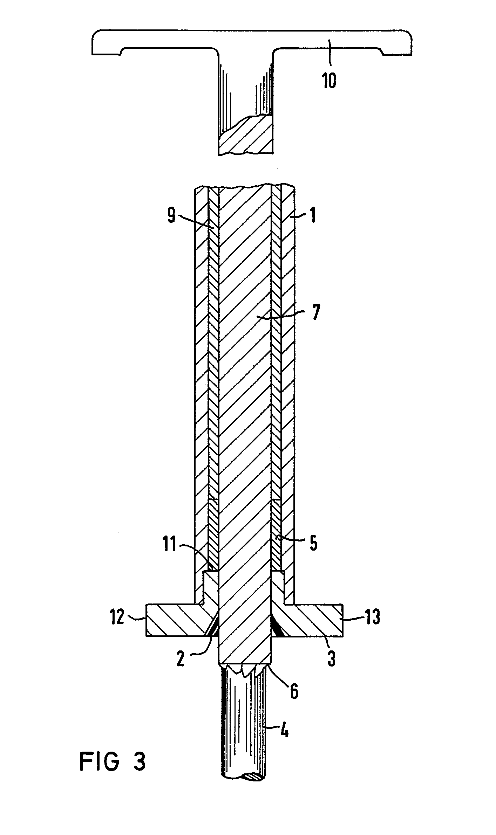

Fig. 3 discloses how fuel rod 4 is forced from the interior of housing 1, should the memory of elastomer body 5 fail and the fuel rod is not released. The solid removal rod 7 is coaxially arranged within housing 1 to be reciprocated to remove fuel rod 4, if necessary. Of course, misalignments of the structure may result in a "hangup" of the fuel rod within housing 1. In all events, when reciprocated, removal rod 7 will bear upon the upper end of the fuel rod to positively eject the fuel rod when necessary. Movement of the removal rod is accomplished by moving a tee handle 10 in the direction of the end cap 3. This forces the removal rod through the inside diameter of push rod 9, elastomer body 5, and end cap 3. The removal rod positively pushes the fuel rod, or pieces thereof, from the tool assembly into the suitable container. The tee handle is operated by using a long metal pole with a fork-like fixture at the end of the pole. However, operation could be accomplished with hydraulic or pneumatic cylinders or a mechanical linkage integral with the rod pulling tool assembly.

Conclusion

End cap 3 is disclosed as controlling the entry of the fuel rod into housing 1 through aperture 2. The cap, when threaded into the lower end of housing 1, provides a surface 11 upon which the elastomer body rests. The elastomer body is captured between surface 11 and the lower end of

C-842060

push rod 9 and is deformed for the purpose of gripping the side of the fuel rod. Preferably, although not necessarily so, elastomer body 5 is in the form of a rube or ring. Cap 3 includes two protrusions 12 and 13 at right angles to the axis of the housing. These protrusions can engage slots in a suitable container, not shown, for disposing of radioactive fuel rods. In the event the elastomer body cannot be released from the fuel rod, or in the event that high contamination levels prevent removal of the elastomer body from the pool water, the protrusions on the cap are engaged by the slots in the container and the rod pulling tool assembly rotated to cause the cap and elastomer body to be removed from housing 1. This assures release of the fuel rod. The truncated cone of the cap not only guides the fuel rod into the housing, but it also causes the inward movement of any flared or protruding segments of the fuel rod cladding so the rod can be passed through the elastomer body. The inside diameters of cap 3, elastomer body 5, and push rod 9 are sufficiently large that the rough broken end of the fuel rod can enter the tool and be gripped.

From the foregoing, it will be seen that this invention is one well adapted to attain all the ends and objects hereinabove set forth, together with other advantages which are obvious and inherent to the apparatus.

It will be understood that certain features and subcombinations are of utility and may be employed without reference to other features and subcombinations. This is contemplated by and is within the scope of the invention.

As many possible embodiments may be made of the invention without departing from the scope thereof, it is to be understood that all matter herein set forth or shown in the accompanying drawings is to be interpreted in an illustrative and not in a limiting sense.

CLAIMS

1.  A tool assembly for removing broken fuel rods from fuel
    assemblies, including, a cylindrical housing positioned vertically, a tube of elastomeric material mounted coaxially within
    the cylindrical housing to receive the upper end of
    a broken fuel rod, and a cylindrical push rod mounted coaxially within the
    bore of the housing and reciprocable within the
    housing to contact and deform the elastomeric tube
    laterally into engagement with the side of the
    broken fuel rod.

2.  The tool assembly of Claim 1, in which, a solid removal rod is mounted within the housing to reciprocate along the axis of the housing to bear upon
    the upper end of the removed fuel rod and eject the
    rod from the housing.

3.  The tool assembly of Claim 1, including, an end cap threaded to the lower end of the housing and
    having an axially aligned truncated cone formed
    therein which flares away from the housing interior
    through which the broken fuel rod is received.

4.  The tool assembly of Claim 3, in which, the end cap is provided protrusions at right angles to
    the housing axis whereby the end cap can be held in
    place while the tool assembly is rotated to disengage the cap from the end of the housing.

C-842060

0200988

13

FIG 1

213

FIG 2

3/3

FIG 3

European Patent
Office

**EUROPEAN SEARCH REPORT**

Application number

EP 86 10 5542

| | **DOCUMENTS CONSIDERED TO BE RELEVANT** | | |
|---|---|---|---|
| Category | Citation of document with indication, where appropriate, of relevant passages | Relevant to claim | CLASSIFICATION OF THE APPLICATION (Int. Cl.4) |
| A | FR-A-1 225 784 (C.E.A.) <br> * Page 1, left-hand column, paragraph 3; abstract; figure 1 * | 1 | G 21 C 19/26 <br> B 25 B 9/00 |
| | --- | | |
| A | US-A-4 049 307 (POTTS) <br> * Column 2, lines 31-45; figures 1,2 * | 1 | |
| | --- | | |
| A | US-A-3 537 234 (FOSTER) <br> *. Column 3, lines 60-75; column 4, lines 1,2; figures 2,3 * | 1 | |
| | ----- | | |
| | | | TECHNICAL FIELDS SEARCHED (Int. Cl.4) |
| | | | G 21 C 19/00 <br> B 25 B 9/00 <br> B 25 B 27/00 <br> F 16 L 55/00 <br> B 67 B 3/00 <br> B 23 D 19/00 |

The present search report has been drawn up for all claims

| Place of search | Date of completion of the search | Examiner |
|---|---|---|
| THE HAGUE | 07-08-1986 | KAVCIC D. |